# EUROPEAN PATENT APPLICATION

(11) **EP 1 920 913 A1**
(43) Date of publication of application: **14.05.2008**
(21) Application number: 07388080.9
(22) Date of filing: 06.11.2007
(51) Int. Cl.: B32B 1/08, F16L 55/165, C08J 5/24

(54) **A lining assembly, a lining tube, a composite lining assembly and a solidified lining tube**

(30) Priority: 06.11.2006 EP 06388060
(71) Applicant: Per Aarsleff A/S, 8230 Abyhoj (DK)
(72) Inventor: Jensen, Svend Erik, 8370 Hadsten (DK)
(74) Representative: Nielsen, Henrik Sten

(57) **Abstract**

A lining assembly for assembling a lining tube for lining a pipe by impregnating the lining tube by a specific resin. The lining tube is after impregnation introduced into the pipe and cures the resin for solidifying the lining tube. The lining assembly comprises a first layer constituting a first mat of a first fibrous material, which material exhibits affinity to the resin for allowing the first mat to be impregnated by the resin. The first layer defines a first longitudinal direction, a first transversal direction orthogonal to the first longitudinal direction and a first orthogonal direction along the thickness of the mat and orthogonal to the first longitudinal direction and the first transversal direction. The lining assembly further comprises a second layer constituting a reinforcing layer including reinforcing fibres or reinforcing threads extending in the first longitudinal direction exclusively, and a third layer constituting a capillary-breaking layer comprising a fibrous filament structure including filament fibres extending exclusively in a plane defined by the first longitudinal direction and the first transversal direction. The fibrous filament structure exhibits affinity to the resin for allowing the fibrous filament structure to be impregnated and serves to prevent air bubbles within the layers from being transferred through the third layer.

## Description

The invention relates to a lining assembly, a lining tube, a composite lining assembly and a solidified lining tube.

When pipe systems are to be renovated, trench-less methods are applied using lining tubes. For instance leaky, worn and poorly maintained pipes such as sewer pipes are renovated applying lining tubes inside the pipes. The renovation is carried out in order to avoid infiltration and leakage that can be damaging to the environment. The tasks are either to execute preventive maintenance or to perform acute repairs to prevent further damage, e.g. sieving out of fluids. The renovation by applying lining tubes can also take place in underground pipe systems, e.g. renovation of sewer pipes and manholes.

Further, the renovation can also take place above the ground, e.g. renovation of vertical pipes such as process pipes, downpipes, vent ducts etc. e.g. vertical pipes and duct systems for housing associations, in public buildings and for private house owners.

The major advantage of the trenchless rehabilitation methods, by which the rehabilitation takes place from the inside as opposed to from the outside, is that the work can be done fast and with a minimum of inconvenience to the traffic, production, businesses and residents.

Various lining assemblies and techniques of producing lining assemblies are known from among others US 6,708,729, US 2003/217777, WO 2005/046963, EP 1 588 838, US 2003/113489, WO 91/18234 and US 5,411,060. Reference is made to the above patent applications and patents and the above US patents are hereby incorporated in the present specification by reference.

From EP 0 799 397 it is known how to produce a flexible tube for lining pipes, channels or the like, with an outer woven, layered or knitted glass-fibre web, a voluminous glass-fibre product mat and a covering inner woven, layered or knitted glass-fibre web, while the combined web thus formed is shaped into a flexible tube and the combined web edges are bonded together, in which the outer woven, layered or knitted glass-fibre web consists of a cut fibre mat which is bonded to the voluminous glass-fibre product, which consists of a needle felt, whereby the inner glass-fibre knitted web consists of a cut fibre mat bonded with a voluminous glass-fibre product in the form of a needle felt.

The technique of rehabilitating an underground pipe by introducing a lining tube impregnated by means of a resin into the pipe and causing the lining tube to be contacted to the inner surface of the pipe by applying pressure to the inside of the lining tube and at the same time applying heat to the lining tube for curing the resin and consequently solidifying the lining tube has been refined for many years. The technique of rehabilitating pipes by introducing a lining tube into the pipe and solidifying the pipe by curing the resin included in the lining tube has been carried out in accordance with two alternative techniques, the one including the simple technique of pulling the lining tube into the pipe to be renovated and forcing the lining tube outwardly into contact with the inner surface of the pipe and a different technique involving the so-called inversion of the lining tube as the lining tube is turned inside out as water or preferably pressurised air is used to force the lining tube in the inversion process into the pipe and afterwards solidifying the lining tube by introducing hot water or steam into the lining tube for causing the resin to cure.

The applicant company being one of the world's leading contractors with the field of rehabilitating pipes including sewer pipes, water lines, etc. has, however, realised that the technique of rehabilitating underground pipes by introducing a lining tube into the pipe may be further refined as in some applications the solidified lining tube may unintentionally allow water to migrate through the wall of the solidified lining tube through capillary holes in the solidified lining tube. It has for many years been a common practice of using a multiplicity or a plurality of individual lining assemblies in the lining tube for preventing air to migrate through the layers for curing the resin in order to prevent that capillary holes be generated extending through the solidified lining tube.

The applicant company has carefully investigated the origin of possible capillary holes extending through solidified lining tubes and has through the investigations deduced a technical solution to the problem of preventing capillary holes to be generated extending through the solidified lining tube while the resin is solidified.

An object of the present invention is to solve the above problem of preventing air included as air bubbles in the resin to be solidified to generate capillary holes extending transversely through the solidified lining tube of a rehabilitated pipe such as a renovated sewer pipe, a gas pipe, etc. by preventing any air bubbles included in the resin from migrating transversely through the layers of the lining tube at the time of solidifying the resin by means of which the lining tube is impregnated.

It is a feature of the present invention that a capillary-breaking layer is provided as an integral part compatible with the fibre materials of the lining tube and also with the resin used in the lining tube for integrally preventing capillary holes to be generated at the time of curing the resin while exposing the resin to a high temperature such as hot water or steam as the air bubbles inevitably included in the resin are prevented from migrating through the capillary-breaking layer of the lining assembly of the lining tube.

A particular advantage of the present invention relates to the fact that the presence of the capillary-breaking layer in the lining assembly allows the lining tube to be produced from only a few individual lining assemblies rather than from a multiplicity of lining assemblies such as 6-10 lining assemblies as is conventional in the industry, and consequently allows the rehabilitation technique to be used even for fairly small tubes such as tubes having a diameter of e.g. less than 0,5 cm such a 15-50 cm, e.g. 20-40 cm, preferably 20 -30 cm.

It is a further advantage and feature of the present invention that the lining assembly is provided constituting a layer of a multi-layer lining tube which lining tube has an overall thickness of no more than 70-105 mm, such as two or three times 35 mm corresponding to a thickness of a lining tube composed of only two or three lining assemblies each having a thickness of approximately 35 mm.

The above object, the above feature and the above advantage together with numerous other objects, features and advantages which will be evident from the below detailed description of the presently preferred embodiment of the present invention is according to the teachings of the present invention obtained by a lining assembly to be used for assembling a lining tube for lining a pipe by impregnating the lining tube by a specific resin, introducing the lining tube after impregnation into the pipe and curing the resin for solidifying the lining tube, the lining assembly comprising
a first layer constituting a first mat of a first fibrous material, the first mat defining a thickness, and the first fibrous material exhibiting affinity to the resin for allowing the first mat to be impregnated by the resin, the first layer defining a first longitudinal direction, a first transversal direction orthogonal to the first longitudinal direction and a first orthogonal direction along the thickness of the mat and orthogonal to the first longitudinal direction and the first transversal direction, the first longitudinal direction, the first transversal direction and the first orthogonal direction together defining a first orthogonal system, the fibrous material of the first mat including fibres orientated along all three directions of the first orthogonal system,
a second layer constituting a reinforcing layer including reinforcing fibres or reinforcing threads extending in the first longitudinal direction exclusively and serving to prevent elongation of the first layer constituting the first mat,
a third layer constituting a capillary-breaking layer comprising a fibrous filament structure including filament fibres or a single filament fibre extending exclusively in a plane defined by the first longitudinal direction and the first transversal direction, the fibrous filament structure exhibiting affinity to the resin for allowing the fibrous filament structure to be impregnated by the resin and serving to prevent air bubbles present within the first layer and/or the second layer from being transferred through the third layer and further preventing air bubbles present within the third layer from leaving the third layer when curing the resin by guiding the air bubbles along the fibrous filament structure and by trapping the air bubbles within the fibrous filament structure, and
the first layer, the second layer and the third layer joined together defining the lining assembly.

According to the basic teachings of the present invention, as the presence of the capillary-breaking layer constituted by a fibrous filament structure including filament fibres or a single filament fibre extending exclusively in the plane defined by the longitudinal direction and the transversal direction of the layer constituting a fibrous material mat of the lining assembly to any substantial extent prevents air bubbles included in the resin at the time of curing the resin from migrating through the third layer constituting the capillary-breaking layer and consequently to a substantial extent preventing the creation of capillary holes extending through the final lining tube which capillary holes are contemplated to originate from air bubbles migrating through the lining tube as has become a problem in the industry at the time of pressurising and heating the lining tube.

The first, second and third layers of the lining assembly according to the first aspect of the present invention and joined together defining the lining assembly may be positioned relative to one another in any arbitrary sequence as the first layer may define an intermediate layer, the second layer defining a top layer and the third layer defining a bottom layer, or the first layer defining an intermediate layer, the second layer defining a bottom layer and the third layer defining a top layer, or the first layer defining a top layer, the second layer defining an intermediate layer and the third layer defining a bottom layer, or the first layer defining a bottom layer, the second layer defining an intermediate layer and the third layer defining a top layer, or the first layer defining a top layer, the second layer defining a bottom layer and the third layer defining an intermediate layer, or the first layer defining a bottom layer, the second layer defining a top layer and the third layer defining an intermediate layer.

According to a presently preferred embodiment of the lining assembly according to a third aspect of the present invention, the lining assembly further comprises a fourth layer constituting a second mat of a second fibrous material, the second mat defining a thickness, and the second fibrous material exhibiting affinity to the resin for allowing the second mat to be impregnated by the resin, the fibrous material of the second mat including fibres orientated along all three directions of the first orthogonal system, the fourth layer defining an additional top, bottom or intermediate layer, and the first, second, third and fourth layers joined together defining the lining assembly.

The first mat of the first layer may be made from any appropriate fibrous material or combination or composition of fibrous materials providing and fulfilling the feature of exhibiting affinity to the resin used in the process of curing the lining tube which resin may e.g. be a polyester resin or an epoxy resin. The fibres may generally have any orientation randomly along the first longitudinal direction, the first transversal direction and the first orthogonal direction, however, for specific applications, the first mat may exhibit fibres exhibiting a predominant orientation along specific orientations such as the orthogonal direction or the transversal direction for providing specific properties e.g. in terms of strength etc. in said direction or directions.

Dependent on the application, the fibrous material of the first mat may comprise fibres of any relevant fibrous materials including inorganic or organic materials such as polymer materials including fibres of polyester, acryl, polypropen and glass and combinations thereof, sewn, woven, layered or knitted together.

Similarly the second fibrous material of the second mat if any, may be made from different materials such as fibres of polyester, acryl, polypropen and glass and combinations thereof.

It is to be understood that the reinforcing layer constituted by the second layer basically serve the overall purpose of providing mechanical strength to the lining assembly while handling the lining assembly, i.e. while folding the lining assembly into a tube and possibly adjoining the lining assembly to further lining assemblies and also in the step of impregnating the lining assembly together with additional lining assemblies, if any and further in the process of introducing the lining assemblies together constituting a lining tube into the pipe to be rehabilitated or renovated.

The fibres of the reinforcing threads of the second layer may comprise any fairly strong and mechanically stable fibres such as fibres of polyester, polypropen, glass, kevlar and carbon and combinations thereof.

As indicated above, the materials of the first, second third and fourth layers have to exhibit affinity to the resin used in order to provide a high strength binding between the materials of the layers and the resin in question. Still further it is contemplated that the highly advantageous capillary-breaking ability of the third layer is enhanced provided the filament fibres or the single filament fibre of the fibrous filament structure of the third layer exhibit an even higher affinity to the resin in question as compared to the materials of the first, second and fourth layers for providing an even better bonding and higher strength contact between the fibrous material of the third layer as compared to the bonding between the fibrous materials of the first, second and fourth layer and the resin in question. In the present context, the expression affinity relates to the mechanical binding or bonding between the resin and the fibrous material in question as expressed in the strength of binding or bonding between the fibrous material and the resin.

For specific applications the fibrous filament structure of the third layer constituting the capillary-breaking layer may have a higher or lower affinity to the resin in question as compared to the affinity, i.e. the binding or bonding strength between the fibrous material of the first, second and fourth layer and the resin in question in order to allow the air bubbles to contact the filament fibres or the filament fibre of the fibrous filament structure of the third layer and consequently be trapped within the filament structure along which the air bubbles are guided in the overall plane defined by the first longitudinal direction and the first transversal direction and consequently, as discussed above, be prevented from migrating through the third layer constituting the capillary-breaking layer.

As stated above, the lining assembly according to the first aspect of the present invention is used as a single lining assembly which is formed into a tube or alternatively used in conjunction with a plurality of similar lining assemblies in a composite multi-layer structure in which the individual layer of the multi-layer structure is constituted by a lining assembly which itself includes three or four layers as defined in the first aspect of the present invention. Consequently, according to a second aspect of the present invention fulfilling the above object and the above feature together with other objects, features and advantages, a lining tube is provided including one or more lining assemblies according to the first aspect of the present invention in which lining tube the assemblies are turned along their longitudinal direction defining the lining tube.

According to a third aspect fulfilling the above object and the above feature together with other objects, features and advantages the present invention further relates to a composite lining assembly including one or more lining assemblies according to the first aspect of the present invention such as 2, 3, 4, 5, 6, 7, 8 or 9 lining assemblies, said lining assemblies being turned round along said first longitudinal direction into a tubular structure defining said lining tube.

The composite lining assembly from which the lining tube is produced, preferably further includes according to a further embodiment of the composite lining assembly according to a third aspect of the present invention a specific resin impregnating the layers of the one or more lining assemblies of the composite lining assembly.

According to a fourth aspect of the present invention, a solidified lining tube is provided produced from the lining tube according to a second aspect of the present invention and including one or more lining assemblies according to the first aspect of the present invention and together constituting a composite lining assembly according to a third aspect of the present invention.

The present invention is now to be further described with reference to the drawings, in which:
Fig. 1 is an overall perspective, schematic and partly cutaway view of a first and presently preferred embodiment of a lining assembly according to the present invention to be used for assembling a lining tube for lining a pipe,
Fig. 2 is an overall perspective, schematic and partly cutaway view in an enlarged scale of the first and presently preferred embodiment of the lining assembly shown in Fig. 1,
Fig. 3 is a schematic and perspective view illustrating a capillary barrier effect provided by a fibrous filament structure included in the lining assembly according to the present invention,
Fig. 4 is a vertical sectional view of the first and presently preferred embodiment of the lining assembly also shown in Figs. 1 and 2 and illustrating the capillary-breaking effect provided by the presence of the fibrous filament structure also shown in Fig. 3,
Fig. 5 is a schematic and perspective view illustrating a technique of impregnating a lining tube produced from the lining assembly shown in Figs, 1, and 2,
Fig. 6 is a vertical sectional view of the lining tube produced from the lining assembly shown in Figs. 1, 2 and 4, and also shown in Fig. 5,
Figs. 7, 8 and 9 are vertical sectional and perspective views illustrating techniques of lining a sewer pipe, a gas pipe or the like by use of the lining tube shown in Figs. 5 and 6.

Throughout the figures the same reference numerals indicate identical elements or components. In the present specification, layers, components or elements identical to layers, components or elements, respectively, described previously with reference to a preceding figure are designated the same reference numerals and components or elements differing from previously described layers, components or elements, respectively, however serving the same overall purpose, are designated the same integer as the previously described layer, component or element.

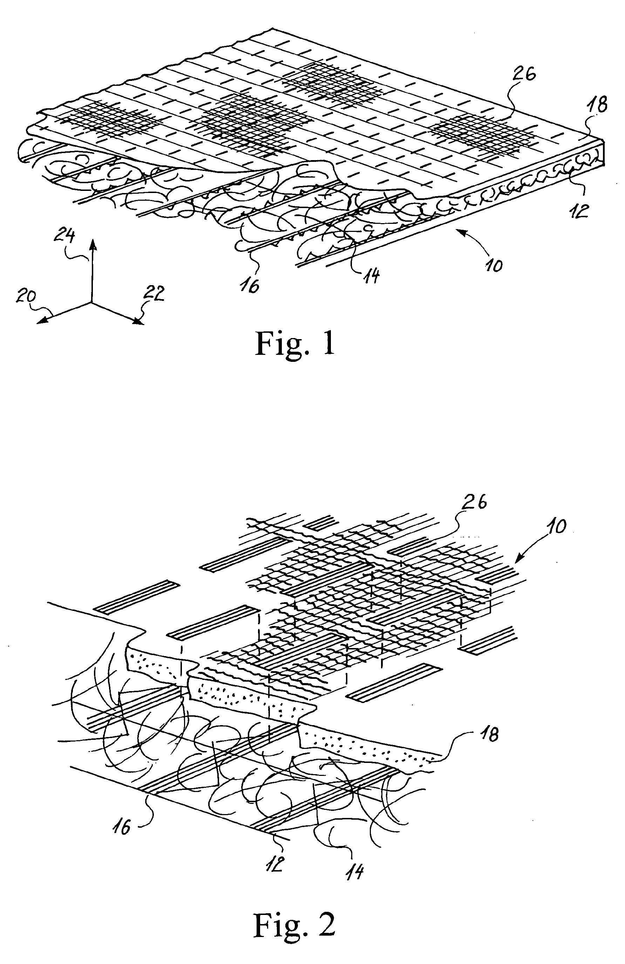

Fig. 1 is an overall perspective, schematic and partly cutaway view of a first and presently preferred embodiment of a lining assembly 10 according to the present invention. The lining assembly 10 is assembled into a lining tube by forming the lining assembly into a tube and possibly adding additional lining assemblies for providing a multi-layer lining assembly structure within the lining tube. The lining tube is to be used by impregnating the lining tube by means of a specific resin and the impregnating lining tube is intended to be introduced into a channel, pipe or tube, such as a gas pipe, an oil line, a sewer pipe, a water pipe or a steam pipe or an electrical cable encasing pipe whereupon the impregnated lining tube is cured for solidifying the resin and consequently providing a solidified lining tube. Dependent on the resin, the curing may be accomplished by heat such as steam or hot water, or alternatively by irradiating the resin by means of an electric-magnetic radiation generating source such as an UV-, an IR- or light source provided the resin includes an IR radiation, a UV radiation or a light sensitive constituent, respectively, causing heating and curing of the resin by the exposure.

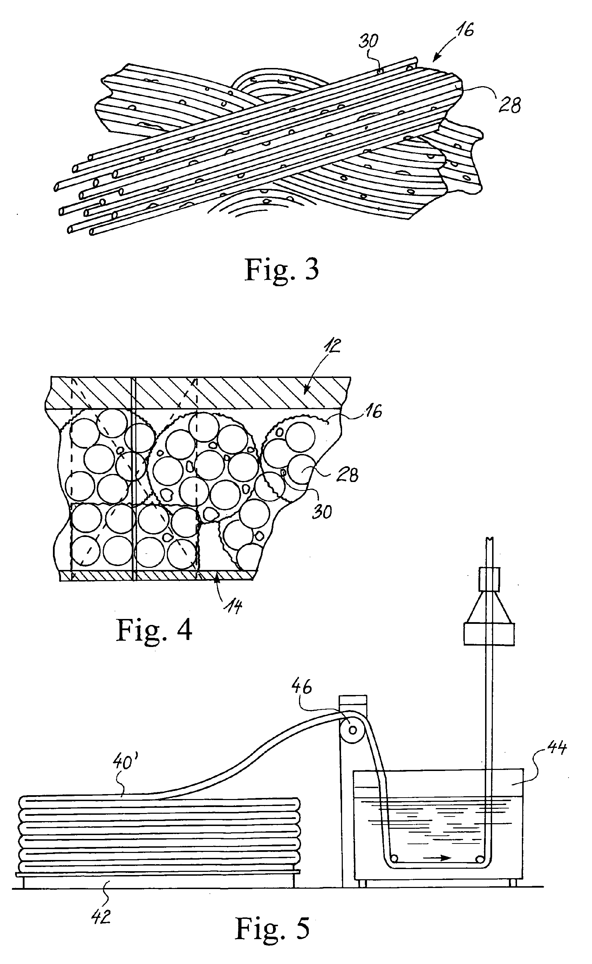

The lining assembly constitutes as indicated above a single layer to be used in a lining tube as a multiplicity of lining assemblies may be combined for providing a multi-layer lining assembly structure. The individual lining assembly 10 is composed of three or four individual layers, a first layer constituting a first mat of a fibrous material and designated the reference numeral 12, a second layer 14 including reinforcing strands extending in the longitudinal direction of the final lining tube, a third layer 16 constituting a capillary-breaking layer to be described in greater details below with reference to Figs. 3 and 4, and further a fourth layer 18 constituting a second mat designated the reference numeral. The four layer structure may in an alternative embodiment be modified into a three layer structure as one of the layers constituting the first and the second mat may be omitted as the lining assembly is combined with a further lining assembly having a layer constituting a mat facing the capillary-breaking layer and/or the reinforcing layer. It is to be understood that the order of the layers constituting the first mat, the reinforcing layer, the capillary-breaking layer, and the second mat if any, may be altered by shifting the order of the layers e.g. by positioning the reinforcing layer and the capillary-breaking layer on opposite sides of the one mat or alternatively by positioning the reinforcing layer on top of the mat and adding the capillary-breaking layer on top of the reinforcing layer.

The first and the fourth layer constituting a first and a second mat, respectively, and designated the reference numerals 12 and 18, respectively, are made from a fibrous material, preferably the same fibrous material or in the alternative different fibrous materials such as fibres of polyester, acryl, polypropylen and glass or combinations thereof and exhibiting affinity to the resin to be used for curing and solidifying the final lining tube, such as a polyester or epoxy resin.

The lining assembly 10 shown in Fig. 10 defines an orthogonal system in which the fibres or strands of the reinforcing layer 16 defines the longitudinal direction of the lining assembly and also of the final lining tube which longitudinal direction is indicated in an orthogonal system shown in Fig. 1 and designated the reference numeral 20. The transversal direction defined in the overall plane defined by the lining assembly is designated the reference numeral 22 and the direction perpendicular to the surface of the lining assembly and defining the thickness of the lining assembly 10 is designated the reference numeral 24.

In the presently preferred embodiment of the lining assembly 10 shown in Fig. 1, the first and the fourth layers 12 and 18, respectively, defining the first and the second mat, respectively, include fibres orientated randomly along the directions 20, 22, and 24, however, according to alternative embodiments, one of the mats 12 or 18 or both mats 12 and 18 may for a specific application include fibres having a predominant orientation along the longitudinal direction, along the transversal direction, or alternatively along the perpendicular orientation 24 for providing a specific function as to mechanical strength or integrity of the lining assembly, or alternatively the final lining tube composed of a plurality of lining assemblies.

The second layer constituting a reinforcing layer 14 basically comprises strands or fibres of a reinforcing material such as strands of glass fibres or carbon fibres and basically serves the purpose of providing integrity to the lining assembly while handling the lining assembly and also handling the lining tube composed of a plurality or multiplicity of lining assemblies in order to prevent that the mats such as the mats 12 and 18 of the lining assembly shown in Fig. 1 be stretched as the mats 12 and 18 have fairly limited resistant to longitudinal extension of the mat in question.

The third layer 16 constituting a capillary-breaking layer comprises a fibrous filament structure including a single randomly laid filament fibre extending exclusively in the plane defined by the longitudinal direction 20 and the transversal direction 22, or includes a plurality of filament fibres also extending exclusively in the plane defined along the longitudinal and transversal directions 20 and 22.

As is evident from Fig. 1, the layers 12, 14, 16 and 18 of the lining assembly 10 are joined together and kept together by means of sewing the layers together by means of a sewing thread or stitches indicated by the reference numeral 26.

The layer 16 constituting a capillary-breaking layer and including a single filament fibre or a plurality of filament fibres of the fibrous filament structure extending in the plane defined by the longitudinal direction 20 and the transversal direction 22, exclusively, serve due to the affinity of the single filament fibre or the filament fibres to the resin in question used for solidifying the final lining tube to trap any air bubbles present in the resin and consequently prevent the air bubbles from migrating through the third layer including the capillary-breaking fibrous filament structure impregnated by the resin. It is contemplated that the capillary-breaking effect is due to the orientation of the fibrous filament structure and the affinity of the single filament fibre or the filament fibres of the fibrous filament structure as the air bubbles present in the resin impregnating the capillary-breaking layer constituted by the third layer 16 are caught by the fibrous filament structure and trapped by the filament of the filament fibres of the fibrous filament structure as is illustrated in Figs. 3 and 4.

In addition, it is contemplated that any air bubbles included in the resin impregnating the first, the second and the fourth layers designated the reference numerals 12, 14 and 18, respectively, are prevented from migrating through the resin impregnating the capillary-breaking third layer 16 as the air bubbles similar to the air bubbles originally present with the resin impregnating the capillary-breaking third layer 16 are caught by the fibrous filament structure and trapped within the fibrous filament structure, thereby preventing any joining of capillary passages from e.g. the first layer through the third layer and into the fourth layer or alternatively in adjoining the first layer of the adjacent lining assembly.

Experiments performed by the applicant company demonstrates the surprising effect by the presence of the single layer orientation of the capillary fibrous filament structure of the third layer 16.

In Fig. 2, an enlarged scale view of the overall perspective, schematic and partly cutaway view of the first and presently preferred embodiment of the lining assembly 10 shown in Fig. 1 is illustrating the overall structure of the lining assembly.

Fig. 3 illustrates in a perspective view the inner structure of the capillary-breaking layer or third layer 16 after the lining assembly has been impregnated. The capillary-breaking layer 16 includes as described above a fibrous filament structure including filament fibres or a single filament fibre, which fibrous filament structure extends exclusively in a plane defined by the longitudinal direction 20 and the transversal direction 22 as defined and illustrated Fig. 1. The fibrous filament structure exhibits affinity to the resin and allows the fibrous filament structure to be impregnated by the resin. The third layer 16 serves to prevent air bubbles present within the mats 12 or 18 or the third layer 16 from being transferred through the third layer 16 and further prevents air bubbles present within the third layer 16 from leaving it, when curing the resin as it is contemplated that the air bubbles are guided along the fibrous filament structure and trapped in the fibrous filament structure. Consequently, the air bubbles are prevented from penetrating transversally in the orthogonal direction 24 through the third layer 16, i.e. through the capillary-breaking layer. Accordingly the air bubbles are retained in the capillary-breaking layer, and thus the air bubbles do not move to or into any nearby neighbouring layer, e.g. into the mats 12 or 18 and/or into the reinforcing layer 14.

In Fig. 3, a single filament of the fibrous filament structure 16 is designated the reference numeral 28 and the reference numeral 30 designates an air bubble 30 trapped with the fibrous filament structure 16.

Fig. 4 is a vertical sectional view of a slightly modified variant of the lining assembly 10 shown in Figs. 1 and 2 as in fig. 4 the capillary-breaking layer 16 is sandwiched between the first layer or the first mat 12 and the second layer or reinforcing layer 14. In the vertical sectional view of Fig. 4, the single filament fibre 28 is shown constituting a filament fibre of a bundle of filament fibres in which air bubbles are trapped as a single air bubble is designated the reference numeral 30. Like in Fig. 3, the view of Fig. 4 illustrates the lining assembly after the lining assembly has been impregnated by the resin including the air bubbles which as discussed and described above, are trapped within the bundles of the fibrous filament structure of the third layer or the capillary-breaking layer.

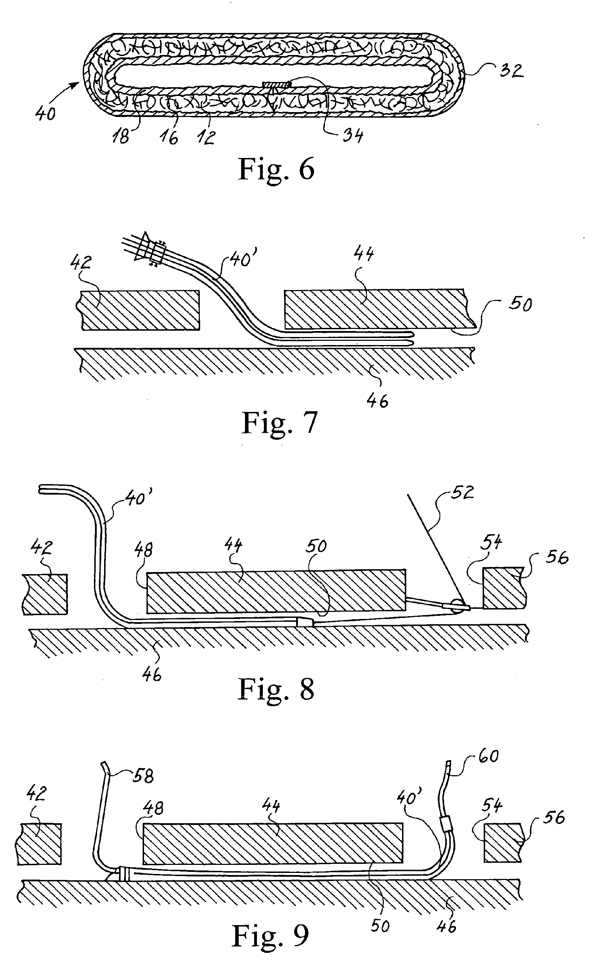

In Fig. 6, a lining tube is shown including a single lining assembly 10 as shown in Fig. 1 and 2 and encased within an outer plastics foil such as a plastics foil made from PVC and designated the reference numeral 32. In Fig. 6, the lining assembly 10 is of the same single layer structure as is illustrated in Fig. 4, and in Fig. 6, the first layer 12 is facing the outer plastics tube 32. In Fig. 6, the reference numeral 34 designates a joint by means of which the lining assembly 10 is assembled into a tube having the joint 34 extending in the longitudinal direction of the lining assembly and also in the longitudinal direction of the lining tube. The lining tube of Fig. 6 is in its entirety designated the reference numeral 40.

Fig. 5 is a schematic view illustrating a process of impregnating a lining tube such as the lining tube 40 shown in Fig. 6 or alternatively a lining tube composed of a plurality of lining assemblies provided a multi-layer structure of the lining tube and not including the outer plastics tube 32 shown in Fig. 6 which lining tube is designated the reference numeral 40'. The lining tube 40' is transferred from a supply on a support 42 to a resin impregnating part 44 as the lining tube is propelled by means of a roller 46 and emerged into the resin contained within the resin bath 44.

Provided the lining tube 40' is provided with an outer liquid and gas impermeable membrane such as a plastics tube, e.g. the plastics tube 32 mentioned above with reference to Fig. 6, the impregnated lining tube 40 may be stored for en extended period of time such as e.g. a few days or even a week allowing the impregnated lining tube to be shipped from the impregnation site to a site in which the tube is used for reinforcing a pipe or tube such as a sewer pipe, a gas pipe, a steam or water line or e.g. a pipe in which cables such as electric power cables or signalling cables are encased.

In Figs. 7, 8 and 9, the reference numeral 42, 44 and 46 designate earth formations and between the earth formations 42 and 44, a cesspool 48 is provided and below the earth formation 42 and 44 and above the earth formation 46, a pipe such as a sewer pipe 50 is defined.

In Fig. 7, the lining tube 40' is introduced into the pipe or sewer pipe 50 in accordance with a technique known as inversion technique according to which the lining tube is turning the inside out as the outer surface of the lining tube is transferred into the inner surface of the final lining and the inner surface of the lining tube is caused to contact the inner surface of the pipe or sewer. After the process of introducing the lining tube 40' into the pipe or sewer pipe 50, the resin contained in the lining tube is caused to cure by the application of heat, e.g. by means of steam or hot water.

In Figs. 8 and 9, an alternative technique of introducing the lining tube 40' is shown according to which technique the lining tube is simply pulled into the pipe or sewer by means of a rope as the lining tube is introduced into the pipe or sewer pipe 50 through a first cesspool and the rope is pulled upwardly from a second cesspool 54 defined between a further earth formation 56 adjacent to the earth formation 44 and above the earth formation 46.

Within the spirit of the invention the first layer or mat 12, the reinforcing layer 14 and the third layer or the capillary-breaking layer 16 may be configured in many ways to define the lining assembly 10. Six variants of the configuration of the lining assembly 10 are possible:

| **Top layer** | **Intermediate layer** | **Bottom layer** |
|---|---|---|
| reinforcing layer 14 | mat 12 | capillary-breaking layer 16 |
| capillary-breaking layer 16 | mat 12 | reinforcing layer 14 |
| mat 12 | reinforcing layer 14 | capillary-breaking layer 16 |
| capillary-breaking layer 16 | reinforcing layer 14 | mat 12 |
| mat 12 | capillary-breaking layer 16 | reinforcing layer 14 |
| reinforcing layer 14 | capillary-breaking layer 16 | mat 12 |

In addition thereto a further mat 18 may be added on top or below the top layer, or below the intermediate or bottom layer to define a four-layer lining assembly.

Adding two or more of the above configurations of the three or four layers lining assemblies together provides a multi-layer lining tube. Consequently, the finished lining tube may be a sandwich construction of e.g. 3, 4, 6, 7, 8, 9, 10, 11, 12, 13, 14, 16, 15, 16, 17, 18, 19, 20, 21, etc of lining assemblies.

It is to be realised that the above-described embodiments of the lining assembly and/or the lining tube may be modified in numerous ways by e.g. swapping, adding, deleting or modifying the layers or the fibrous material or the fibres, and/or by applying various resins during the impregnation process.

The applicant company has in accordance with the so-called APS test (a German test named Arbeitsgruppe Prüfung Schlauch) tested the properties of lining tubes produced in accordance with the teachings of the present invention and including only two or three lining assemblies according to the present invention. In these tests a total of six lining tubes were tested having no inner coating originating from the outer plastics foil tube such as a tube 32 shown in Fig. 6. In the test, a predefined area was exposed, and subjected to a pressure test in which a pressure gradient is established from the inside of the lining tube to the outside. In the test, a coloured water sample is applied to the exposed surface area and through visible inspection of the opposite side of the tube, any water penetrating through the wall, is readily detected. For each of the six lining tubes, a total of 17 tests were made by the above described exposure and pressurising of the area of the lining tube, and none of the tests revealed any capillary penetration through the solidified lining tube, consequently, it is concluded that the capillary-breaking layer fulfils its intentional purpose of preventing any air bubbles in the resin of any of the layers of the composite lining assembly from which the lining tube is made, to penetrate through the common site lining assembly during the process of curing the resin and thereby, the generation of capillary holes extending through the lining tube is prevented.

Although the above description includes the disclosure of a specific and presently preferred embodiment of the engagement lock according to the present invention, and although specific variants or alternative embodiments are described, numerous additional variants or alternatives may be readily produced by a person having skill in the art, and such variants or embodiments are to be construed part of the present invention as defined in the appending patent claims.

## Claims

1. A lining assembly to be used for assembling a lining tube for lining a pipe by impregnating said lining tube by a specific resin, introducing said lining tube after impregnation into said pipe and curing said resin for solidifying said lining tube, said lining assembly comprising
a first layer constituting a first mat of a first fibrous material, said first mat defining a thickness, and said first fibrous material exhibiting affinity to said resin for allowing said first mat to be impregnated by said resin, said first layer defining a first longitudinal direction, a first transversal direction orthogonal to said first longitudinal direction and a first orthogonal direction along the thickness of said mat and orthogonal to said first longitudinal direction and said first transversal direction, said first longitudinal direction, said first transversal direction and said first orthogonal direction together defining a first orthogonal system, said fibrous material of said first mat including fibres orientated along all three directions of said first orthogonal system,
a second layer constituting a reinforcing layer including reinforcing fibres or reinforcing threads extending in said first longitudinal direction exclusively and serving to prevent elongation of said first layer constituting said first mat,
a third layer constituting a capillary-breaking layer comprising a fibrous filament structure including filament fibres or a single filament fibre extending exclusively in a plane defined by said first longitudinal direction and said first transversal direction, said fibrous filament structure exhibiting affinity to said resin for allowing said fibrous filament structure to be impregnated by said resin and serving to prevent air bubbles present within said first layer and/or said second layer from being transferred through said third layer and further preventing air bubbles present within said third layer from leaving said third layer when curing said resin by guiding said air bubbles along said fibrous filament structure and by trapping said air bubbles within said fibrous filament structure, and
said first layer, said second layer and said third layer joined together defining the lining assembly.

2. The lining assembly according to claim 1, said first layer defining an intermediate layer, said second layer defining a top layer and said third layer defining a bottom layer, or said first layer defining an intermediate layer, said second layer defining a bottom layer and said third layer defining a top layer, or said first layer defining a top layer, said second layer defining an intermediate layer and said third layer defining a bottom layer, or said first layer defining a bottom layer, said second layer defining an intermediate layer and said third layer defining a top layer, or said first layer defining a top layer, said second layer defining a bottom layer and said third layer defining an intermediate layer, or said first layer defining a bottom layer, said second layer defining a top layer and said third layer defining an intermediate layer.

3. The lining assembly according to claim 2 further comprising a fourth layer constituting a second mat of a second fibrous material, said second mat defining a thickness, and said second fibrous material exhibiting affinity to said resin for allowing said second mat to be impregnated by said resin, said fibrous material of said second mat including fibres orientated along all three directions of said first orthogonal system, said fourth layer defining an additional top, bottom or intermediate layer, and said first, second, third and fourth layers joined together defining said lining assembly.

4. The lining assembly according to any of the preceding claims, said first fibrous material of said first mat comprising fibres of polyester, acryl, polypropen and glass and combinations thereof, sewn, woven, layered or knitted together.

5. The lining assembly according to any of the preceding claims, said second fibrous material of said second mat comprising fibres of polyester, acryl, polypropen and glass and combinations thereof.

6. The lining assembly according to any of the preceding claims, said first and second fibrous materials being identical.

7. The lining assembly according to the claims 1-5, said first and second fibrous materials being different.

8. The lining assembly according to the preceding claims, said fibres or reinforcing threads of said second layer comprising fibres of polyester, polypropen, glass, kevlar and carbon and combinations thereof.

9. The lining assembly according to the preceding claims, said fibrous filament structure of said capillary-breaking layer comprising fibres of polyester, polypropen, glass, kevlar and carbon and combinations thereof.

10. The lining assembly according to the preceding claims, said fibrous filament structure of said capillary-breaking layer or said third layer, exhibiting higher affinity to said resin than said first, second and fourth layers.

11. A lining tube including one or more of said lining assemblies according to claims 1 - 10, such as 2, 3, 4, 5, 6, 7, 8 or 9 lining assemblies, said lining assemblies being turned along said first longitudinal direction defining said lining tube.

12. A composite lining assembly, including one or more lining assemblies according to any of the claims 1-11 such as 2, 3, 4, 5, 6, 7, 8 or 9 lining assemblies, said lining assemblies being turned round along said first longitudinal direction into a tubular structure defining said lining tube.

13. A composite lining assembly according to claim 12, further comprising said specific resin impregnating said layers of said one or more lining assemblies.

14. A solidified lining tube for lining a pipe including a cured and solidified resin and a lining tube comprising one or more lining assemblies according to any of the claims 1-11.
